# EUROPÄISCHE PATENTANMELDUNG

(11) **EP 1 298 503 A1**
(43) Veröffentlichungstag der Anmeldung: **02.04.2003**
(21) Anmeldenummer: 01123477.0
(22) Anmeldetag: 28.09.2001
(51) Int. Cl.: G05B 9/03, B66C 13/22, B66C 15/00

(54) **Joystick-Steuerung**

(71) Anmelder: Haag, Claus, 76684 Östringen (DE)
(72) Erfinder: Haag, Claus, 76684 Östringen (DE)
(74) Vertreter: Meyer-Roxlau, Reiner F., Dipl.-Ing.

(57) **Zusammenfassung**

Bei einer Joystick-Steuerung für eine Arbeitsmaschine, insbesondere ein Kraftfahrzeug, mit einem Sicherheitskreis neben einem Hauptkreis erfolgt erfindungsgemäß ein elektronischer Vergleich zwischen Istwert-Signalen und Sollwert-Signalen mit dem Ergebnis, dass bei einer unzulässigen Abweichung elektronisch gesteuert, also ohne Mitwirkung der Bedienungsperson, vom Hauptkreis auf den zugehörigen Sicherheitskreis umgeschaltet wird. Eine für diesen Vergleich vorgesehene Überwachungselektronik (6) dient zugleich zur fortlaufenden Speicherung aller Istwerte und Sollwerte, zweckmäßigerweise in Verbindung mit einer zugehörigen Zeitangabe, zur Schaffung einer Möglichkeit eines Abrufs zu Wartungs-, Inspektions- und anderweitigen Diagnosezwecken. Der für den Abruf von Daten vorgesehene Ausgang der Überwachungselektronik (6) kann zugleich als Eingang für die Einspeicherung von Daten verwendet werden.

## Beschreibung

Die Erfindung betrifft eine Joystick-Steuerung zum Steuern bzw. Führen einer Arbeitsmaschine, insbesondere eines Kraftfahrzeugs, gemäß Oberbegriff von Anspruch 1.

Bei diversen Arbeitsmaschinen kommt der Antriebseinheit eine sicherheitsrelevante Funktion zu, derzufolge die Antriebseinheit nicht ausfallen darf. Da dies jedoch nicht garantiert werden kann, müssen zwei Antriebseinheiten vorgesehen sein, wobei eine Antriebseinheit sozusagen eine Sicherheits-Antriebseinheit darstellt, die den Antrieb übernimmt, wenn die eigentliche Antriebseinheit, die als Haupt-Antriebseinheit zu bezeichnen ist, aus irgendeinem Grund ausfällt. In Hinblick auf die Ausbildung einer Joystick-Steuerung im Bereich zwischen dem Joystick und der Antriebseinheit mit diversen Komponenten, u.a. mit einer Steuerelektronik und ggf. mit einer Steuereinheit, insbesondere einer hydraulischen Steuereinheit, wenn es sich bei der Antriebseinheit um eine hydraulische Antriebseinheit handelt, und in Hinblick auf eine generell jeder Antriebseinheit zuzuordnende Antriebsquelle müssen auch diese Komponenten und die Antriebsquelle wegen der sicherheitsrelevanten Aspekte in doppelter Ausführung vorgesehen sein. Dabei bilden die jeweils zweiten Komponenten und die zweite Antriebsquelle in Verbindung mit der zweiten Antriebseinheit und der zugehörigen zweiten Steuerelektronik bzw. ggf. mit der zweiten Steuereinheit einen zweiten Steuerkreis und einen zweiten Arbeitskreis, nämlich jeweils einen Hauptkreis und einen Sicherheitskreis. Wegen der sicherheitsrelevanten Aspekte müssen selbstverständlich auch die zugehörigen Spannungsversorgungen für die einzelnen Komponenten und die Steuerelektronik in jeweils doppelter Ausführung vorgesehen sein. Die vorzusehenden zwei Arbeitskreise sind selbstverständlich voneinander unabhängig und dienen zur Durchführung einer identischen Arbeit.

In der nachfolgenden Beschreibung wird unter einem Arbeitskreis ein Kreis bestehend entweder aus einer hydraulischen Pumpe mit einer nachgeschalteten hydraulischen Steuereinheit und mit einer letzterer nachgeschalteten hydraulischen Antriebseinheit oder aus einer elektrischen Antriebseinheit verstanden, wobei dem Arbeitskreis jeweils eine Antriebsquelle zugeordnet ist, die im Falle einer hydraulischen Antriebseinheit in der genannten hydraulischen Pumpe und im Falle einer elektrischen Arbeitseinheit in einem elektrischen Stellmotor besteht.

Weiter wird in der nachfolgenden Beschreibung unter einem Steuerkreis ein Kreis bestehend aus einer an einer Spannungsversorgung angeschlossenen Steuerelektronik verstanden, die an die Joystickeinheit angeschlossen ist und deren Sollwert-Signale für die Steuerung empfängt und zugehörige Steuersignale entweder über die hydraulische Steuereinheit an die hydraulische Antriebseinheit oder an die elektrische Antriebseinheit als Sollwert-Signale für diese abgibt. Für die Ausbildung der Steuersignale der Steuerelektronik dient ein in dieser gespeicherter Datenplan für die Beziehung zwischen der Stellung des Joysticks einerseits und der Sollbetätigung der jeweils zugehörigen Antriebseinheit andererseits, also für die Beziehung zwischen den Sollwert-Signalen der Joystickeinheit einerseits und den Sollwert-Signalen der jeweils zugehörigen Antriebseinheit andererseits.

Die Steuerelektronik des Hauptkreises und die Steuerelektronik des Sicherheitskreises veranlassen die jeweils zugehörigen hydraulischen Antriebseinheiten über die hydraulische Steuereinheit bzw. die jeweils zugehörigen elektrischen Antriebseinheiten in gegenseitig zeitlich und arbeitstechnisch identischer Weise zur identischen Durchführung ihrer Antriebsarbeit.

Bei störungsfreiem Betrieb des jeweils zugehörigen Hauptkreises befinden sich die Sicherheitskreise im Standby-Modus, und beim Auftreten einer Störung in einem Hauptkreis wird der zugehörige Sicherheitskreis unter Abschaltung des Hauptkreises vom Standby-Modus in den Vollbetrieb-Modus überführt, er tritt also funktionell an die Stelle des störungsbehafteten Hauptkreises.

Eine solche Gestaltung einer Joystick-Steuerung, wie sie im Oberbegriff von Anspruch 1 angegeben ist, ist zwar bereits sehr aufwändig, verlangt dennoch von dem Benutzer eine gewisse Vertrautheit und Erfahrung im Umgang mit der Joystick-Steuerung und insbesondere eine sehr stark erhöhte Aufmerksamkeit bei der Benutzung derselben insbesondere in Hinblick auf die ggf. notwendige Umschaltung von einem Hauptkreis auf einen Sicherheitskreis. Die erhöhte Aufmerksamkeit bei der Benutzung der Joystick-Steuerung reduziert jedoch die Aufmerksamkeit des Benutzers auf andere Begleitumstände, beispielsweise auf das eigentliche Arbeitsgebiet. Insbesondere kann der Benutzer bei einer erhöhten Aufmerksamkeit für das eigentliche Arbeitsgebiet den Ausfall eines Hauptkreises ggf. übersehen und erst aufgrund einer Fehlfunktion oder gar einer vollständig ausgefallenen Funktion der Gesamtsteuerung feststellen. Eine solche Feststellung seitens des Benutzers kann jedoch bei diversen Anwendungen bereits zu spät sein, weil sie zwangsläufig sofort zu einem unfallträchtigen Ablauf der Durchführung der Arbeit einer Antriebseinheit führt.

Insbesondere dann, wenn es sich bei der Arbeitsmaschine beispielsweise um ein Kraftfahrzeug handelt, bei dem eine Joystick-Steuerung zur Führung des Kraftfahrzeugs durch eine körperbehinderte Person vorgesehen ist, muss unter allen Umständen dafür Sorge getragen sein, dass dieser Person keinesfalls mehr Aufgaben zugemutet bzw. auferlegt werden als einer Person, die in der Lage ist, die Arbeitsmaschine bzw. das Kraftfahrzeug in normaler Ausrüstung zu führen. Die körperbehinderte Person darf also nicht mit der zusätzlichen Aufgabe der dauernden Beobachtung der ordnungsgemäßen Funktion der Hauptkreise und nötigenfalls der Umschaltung von den Hauptkreisen auf die Sicherheitskreise belastet werden, damit ihre Aufmerksamkeit wie bei einer nicht-körperbehinderten Person in vollem Umfang für die eigentliche Steuerung der Arbeitsmaschine bzw. der Führung des Kraftfahrzeugs und die Beobachtung des Arbeitsgebietes, insbesondere ggf. des Straßenverkehrs, genutzt werden kann.

Der Erfindung liegt daher die Aufgabe zu Grunde, die eingangs dieser Beschreibung bezeichnete und im Sinne des Oberbegriffs von Anspruch 1 ausgebildete Joystick-Steuerung so auszubilden, dass die Bedienungsperson ihre Aufmerksamkeit ausschließlich auf die eigentliche Arbeit, nämlich die Beobachtung des Arbeitsgebietes und die entsprechende Steuerung der Arbeitsmaschine, richten kann, ohne sich um die Durchführung der Arbeit mittels eines Hauptkreises oder eines Sicherheitskreises kümmern zu müssen.

Dies bedeutet, dass die Erfindung eine solche Ausbildung der eingangs hinsichtlich ihrer Gattung bezeichneten Joystick-Steuerung schaffen muss, die sämtliche die Aufmerksamkeit der Bedienungsperson belastenden Überwachungsaufgaben übernimmt und damit die Möglichkeit bietet, dass die Bedienungsperson ihre Aufmerksamkeit ausschließlich auf die Beobachtung des Arbeitsgebietes richten kann, und zwar ohne dass die Joystick-Steuerung in bedienungstechnischer Hinsicht komplizierter gestaltet ist.

Es ist weiter Aufgabe der Erfindung, die Joystick-Steuerung weiterhin so auszubilden, dass eine nachträgliche Kontrolle des Steuerungsbetriebs möglich ist, einerseits in Hinblick auf Inspektionen und Wartung der gesamten Einrichtung und andererseits aber auch in Hinblick darauf, ob ein ggf. fehlerhafter Arbeitsablauf durch eine fehlerhafte Funktion irgendeiner Komponente der gesamten Einrichtung und ggf. welcher besonderen Komponente oder durch eine fehlerhafte Bedienung seitens der Bedienungsperson veranlasst war.

Da also eine gewisse Automatisierung der Umschaltung eines Hauptkreises auf den zugehörigen Sicherheitskreis geschaffen werden soll, ist es weiter zweckmäßig, im Rahmen der durch die Erfindung zu lösenden Aufgabe die Möglichkeit zu schaffen, dass eine Kontrolle der Betriebsweise der gesamten Einrichtung, gemeint ist hiermit nicht die oben angesprochene Überwachung das Steuerungsbetriebs, und auch ggf. eine Wartung- bzw. Inspektionsarbeit durchgeführt werden kann, ohne hierzu die gesamte Arbeitsmaschine bzw. ggf. das betroffene Kraftfahrzeug in einer speziale Werkstatt verbringen zu müssen.

Zur Lösung des Hauptaspektes der der Erfindung zu Grunde liegenden Aufgabe dienen die im kennzeichnenden Teil von Anspruch 1 angegebenen Merkmale, nämlich zunächst eine Überwachungselektronik, die an eine eigene Spannungsversorgung angeschlossen ist, und zwar in Zuordnung zu einer Steuerelektronik. Dieser Überwachungselektronik werden alle von der Steuerelektronik an die Antriebseinheit abgegebenen Steuersignale sowie die Istwert-Signale der Spannungsversorgung der Steuerelektronik und der Überwachungselektronik zugeführt. Weiter werden der Überwachungselektronik die Istwert-Signale der Arbeitseinheiten zugeführt, sodass die Überwachungselektronik in der Lage ist, entsprechende Vergleiche durchzuführen. Die Zuführung der genannten Signale sollte in Kombination mit der jeweils augenblicklichen Zeit erfolgen, und zwar in Hinblick auf die spätere Auswertung zu Kontrollzwecken. Bei der Durchführung der genannten Vergleiche findet zugleich eine Feststellung statt, ob Abweichungen der Istwert-Signale von den Sollwert-Signalen vorliegen oder nicht. Die letztgenannte Feststellung ist Ausgangspunkt dafür, dass bei Feststellung einer unzulässigen Abweichung von dem durch diese Abweichung betroffenen Hauptkreis auf den zugehörigen Sicherheitskreis umgeschaltet wird. Zu diesem Zweck ist es lediglich notwendig, dass die Überwachungselektronik für eine Unterbrechung der Stromversorgung des jeweiligen Hauptsteuerkreises sorgt und gleichzeitig die Stromversorgung des zugehörigen Sicherheitssteuerkreises einschaltet.

Die vorgenannte Ausbildung durch die Merkmale des kennzeichnenden Teils von Anspruch 1 entlastet die Bedienungsperson der Joystick-Steuerung davon, ihre Aufmerksamkeit auch auf die Funktionalität der Hauptkreise richten zu müssen, sodass sie ihre gesamte Aufmerksamkeit ungeteilt der Handhabung der Joystick-Steuerung und der Beobachtung des Arbeitsgebietes, beispielsweise des Straßenverkehrs, widmen kann. Der Aufwand hierfür ist zwar verhältnismäßig aufwändig, jedoch in Hinblick auf das erreichte Ziel mehr als nur vertretbar, da eine nicht zu unterschätzende Gefahrenquelle ausgeschaltet ist und damit die Sicherheit und das Selbstbewusstsein der Bedienungsperson verbessert sind.

Um eine Umschaltung von einem Hauptkreis auf einen Sicherheitskreis bereits bei einer bei der Durchführung des Vergleichs festgestellten sehr geringen Abweichung zu verhindern, sollte in Weiterbildung in der Überwachungselektronik und/oder der Steuerelektronik ein Datenplan die Sollwert-Signale der Antriebseinheiten einerseits und die Istwert-Signale andererseits betreffend gespeichert sein..

Dies bietet in weiterer Ausbildung dann die Möglichkeit, während des internen Ablaufs der Steuerung solange die von der Steuerelektronik abgegebenen Steuersignale zu verändern und in veränderter Form an die Antriebseinheit abzugeben, bis die mit den ursprünglichen Sollwert-Signalen angestrebten Istwert-Signale erreicht sind. Es findet also sozusagen eine Nachregelung zuvor erreichter Istwert-Signale in Abhängigkeit von der festgestellten Abweichung, also eine Art Rückkopplungsregelung, statt. Eine Möglichkeit zu einer solchen Nachregelung ist immer dann zweckmäßig, wenn äußere Umstände in unvorhersehbarer Weise Ursache für die genannte Abweichung sind, beispielsweise dann, wenn im Falle der Verwendung der Joystick-Steuerung zum Lenken eines Kraftfahrzeugs die Reibung zwischen den Reifen des Kraftfahrzeugs und dem Straßenbelag außergewöhnlich groß ist, wie beim Einparken im Gegensatz zu schneller Fahrt.

In Hinblick auf die spätere Kontrolle des gesamten Steuerungsbetriebs mittels der erfindungsgemäßen Joystick-Steuerung sollte in anderer und/oder zusätzlicher Weiterbildung die Überwachungselektronik ein Speicherelement aufweisen. Dieses Speicherelement dient zur Speicherung aller in die Überwachungselektronik eingegebenen Signale bzw. der Werte derselben sowie der Ergebnisse der durchgeführten Vergleiche.. Damit stehen alle steuerungstechnischen Signale für alle irgendwie vorstellbaren späteren Verarbeitungszwecke zur Verfügung.

Auch kann der Überwachungselektronik selbstverständlich eine Anzeigeeinheit zur Darstellung bestimmter Betriebs- und Steuerungszustände nachgestaltet sein, die nicht nur diese, wie dies hinlänglich anderweitig bekannt ist, darstellt, sondern in Verbindung mit zugehörigen optischen und/oder akustischen Alarmgebern die Bedienungsperson über veränderte Umstände unterrichtet, die zwar noch nicht die Umschaltung von einem Hauptkreis auf einen Heizkreis erforderlich machen, jedoch erkennen lassen, dass dies demnächst möglich werden könnte, wenn nicht zuvor Abhilfe geschaffen wird, beispielsweise in Hinblick auf eine erhöhte Temperatur des hydraulischen Öls etc.

Grundsätzlich sollte zwar jeder Steuerelektronik eine Überwachungselektronik zugeordnet sein; jedoch lässt sich die Gesamtgestaltung der erfindungsgemäßen Joystick-Steuerung vereinfachen und preiswerter gestalten, wenn nur eine einzige Überwachungselektronik, und zwar in gemeinsamer Zuordnung zu jeder Steuerelektronik, vorgesehen ist. Dies ist ohne eigentliche Beeinträchtigung der angestrebten hohen Sicherheit des Steuerbetriebs der Joystick-Steuerung möglich, weil in der Überwachungselektronik keine steuerungstechnischen Abläufe stattfinden. Im Übrigen lässt sich diese in Hinblick auf die angestrebte Sicherheit offenbar geringfügig nachteilige Ausbildung der erfindungsgemäßen Joystick-Steuerung dadurch überwinden, dass in dem Fall einer einzigen Überwachungselektronik in gemeinsamer Zuordnung zu jeder Steuerelektronik ein Teil der Funktion der Überwachungselektronik in die Steuerelektronik integriert wird, sodass bei einem Ausfall der Überwachungselektronik die Umschaltung von einem Hauptkreis auf einen Sicherheitskreis möglich ist und lediglich keine weitere Speicherung der Istwert-Signale und der zugehörigen Sollwert-Signale stattfindet.

Damit für spätere Wartung- und/oder Inspektionszwecke oder zur späteren Kontrolle die während des Steuerungsablaufs angefallenen Steuersignale ausgewertet werden können, sollte in Weiterbildung der erfindungsgemäßen Joystick-Steuerung dem Speicherelement der Überwachungselektronik ein Ausgang zugeordnet sein, über den die gespeicherten Daten von außen abrufbar sind. Ein solcher Anschluss kann für die Anschließung eines Computers mit einem Diagnoseprogramm, für die Anschließung an ein Telefonnetz und/oder an ein Mobiltelefon oder mit einem integrierten Funkmodem ausgebildet sein. Im letztgenannten Fall kann eine Ferndiagnose durchgeführt werden, sodass eventuell notwendige Arbeiten am Ort des Auftretens eines Fehlers veranlasst werden können und damit beispielsweise bei einem mittels der erfindungsgemäßen Joystick-Steuerung betriebenen Kraftfahrzeug letzteres nicht möglicherweise über sehr lange Strecken zu einer besonderen Werkstatt verbracht werden muss. Denn der Ausgang der Speichereinheit und damit der Steuerelektronik kann zugleich als Eingang zu der Überwachungselektronik bzw. der Steuerelektronik genutzt werden, über den Korrekturen der Ursache für eventuelle fehlerhafte Funktionen eingegeben werden können.

In Abwandlung der direkten Zuführung der Istwert-Signale einer hydraulischen Antriebseinheit zu der Überwachungselektronik können diese Signale auch der Steuerelektronik zugeführt werden, ggf. zur Weiterleitung an die Überwachungselektronik. Diese Zuführung der Istwert-Signale zu auch der Steuerelektronik ist insbesondere von Vorteil für die oben bereits erwähnte Nachregelung im Sinne einer Rückkopplungsregelung.

Der genannte Ausgang bietet bei seiner Verwendung als Eingang die Möglichkeit, den oben erwähnten Datenplan für die Beziehung zwischen den Sollwert-Signalen der Joystickeinheit einerseits und den Sollwert-Signalen der jeweils zugehörigen Antriebseinheit andererseits, gegen einen anderen auszutauschen, wann immer dies für zweckmäßig oder notwendig erachtet wird, und zwar auch im Funkwege.

Soll die erfindungsgemäße Joystick-Steuerung zum Lenken eines Kraftfahrzeugs verwendet werden, so sollte ein Sensor zum Feststellen der Fahrgeschwindigkeit vorgesehen sein, dessen die Geschwindigkeit kennzeichnendes Signal an die für das Lenken maßgebliche elektrische Steuereinheit weitergegeben wird, damit diese in Reaktion auf das empfangene Signal nach einer in ihr abgespeicherten Funktion die zugehörige Antriebseinheit mit zunehmender Fahrgeschwindigkeit zu einer degressiven Arbeitsweise angesteuert wird. Dies verhindert, dass bei hoher Fahrgeschwindigkeit bereits geringe Bewegungen des Joysticks zu Lenkausschlägen der Räder führen, die angesichts der hohen Fahrgeschwindigkeit zu erheblichen seitlichen Versetzungen des Fahrzeugs führen würden.

Auch das Signal des Fahrgeschwindigkeit-Sensors sollte in der oben beschriebenen Weise in dem Speicherelement der Überwachungselektronik gespeichert werden, damit ein vollständigeres Bild vom Ablauf des gesamten Steuerungsbetriebs erreichbar ist.

Soll die erfindungsgemäße Joystick-Steuerung sowohl zum Lenken eines Kraftfahrzeugs als auch zum Abbremsen desselben sowie zum Gasgeben verwendet werden, was ohne weiteres möglich ist, beispielsweise indem Bewegungen des Joysticks nach rechts und links zum Lenken des Kraftfahrzeugs nach rechts bzw. links und Bewegungen des Joysticks nach vorn zum Gasgeben und Bewegungen des Joysticks nach hinten zum Abbremsen herangezogen werden, lassen sich die drei Funktionen des Lenkens, des Abbremsens und des Gasgebens mit jeweils einer identischen zugehörigen Ausbildung der Joystick-Steuerung erreichen, wobei allerdings für das Gasgeben kein besonderer Sicherheitskreis vorgesehen werden muss, weil der Ausfall des Kreises für das Gasgeben nicht zwangsläufig zu einer Unfallsituation führt. Der Ausfall des Kreises für das Gasgeben hat lediglich zur Folge, dass eine Weiterfahrt unter Motorleistung nicht mehr möglich ist. Im Übrigen führt die rückwärts gerichtete Bewegung des Joysticks aus dem Bereich für das Gasgeben in Richtung zu dem Bereich für das Abbremsen zwangsläufig zum Abbremsen bei gleichzeitiger Beendigung des Gasgebens. In denjenigen Teilen der erfindungsgemäßen Joystick-Steuerung, die für das Abbremsen und das Gasgeben bestimmt sind, ist bei der dargestellten Ausführungsform die Antriebseinheit jeweils als elektrische Antriebseinheit ausgebildet, sodass in diesem Bereich im keine besonderen Steuereinheiten als Verbindung zwischen einer hydraulischen Pumpe und einer hydraulischen Antriebseinheit notwendig sind. Die elektrischen Antriebseinheiten sind dabei solche, die über elektrische Stellmotoren verfügen.

Nachfolgend wird die Erfindung beispielhaft anhand einer bevorzugten Ausführungsform detailliert und ausschließlich beispielhaft unter Bezugnahme auf die Zeichnungen beschrieben, in denen zeigen:
- Fig. 1: schematisch ein Blockschaltbild einer erfindungsgemäßen Joystick-Steuerung, die beispielhaft zum Lenken eines Kraftfahrzeugs, zum Abbremsen desselben und zum Gasgeben geeignet und bestimmt ist;
- Fig. 2: in vergrößerter Darstellung denjenigen Teil des Blockschaltbilds von Fig. 1, der für das Lenken des Kraftfahrzeugs bestimmt ist; und
- Fig. 3: in vergrößerter Darstellung den restlichen Teil des Blockschaltbilds von Fig. 1, der für das Abbremsen des Kraftfahrzeugs und zum Gasgeben bestimmt ist, wobei bestimmte bei der Joystick-Steuerung erforderliche Komponenten, die bereits in dem in Fig. 2 dargestellten Teil des Blockschaltbilds enthalten bzw. dargestellt sind, in Fig. 3 weggelassen sind.

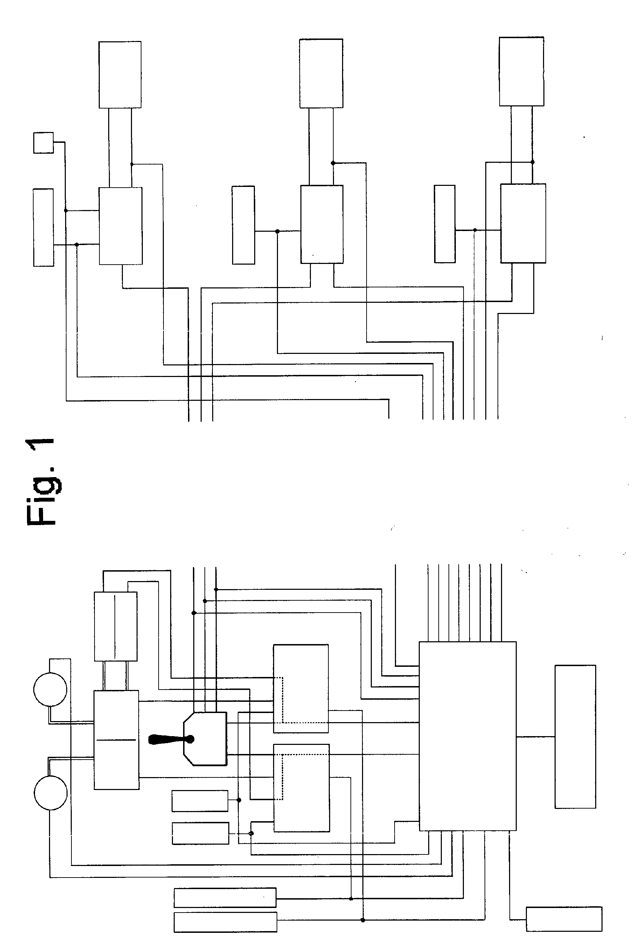

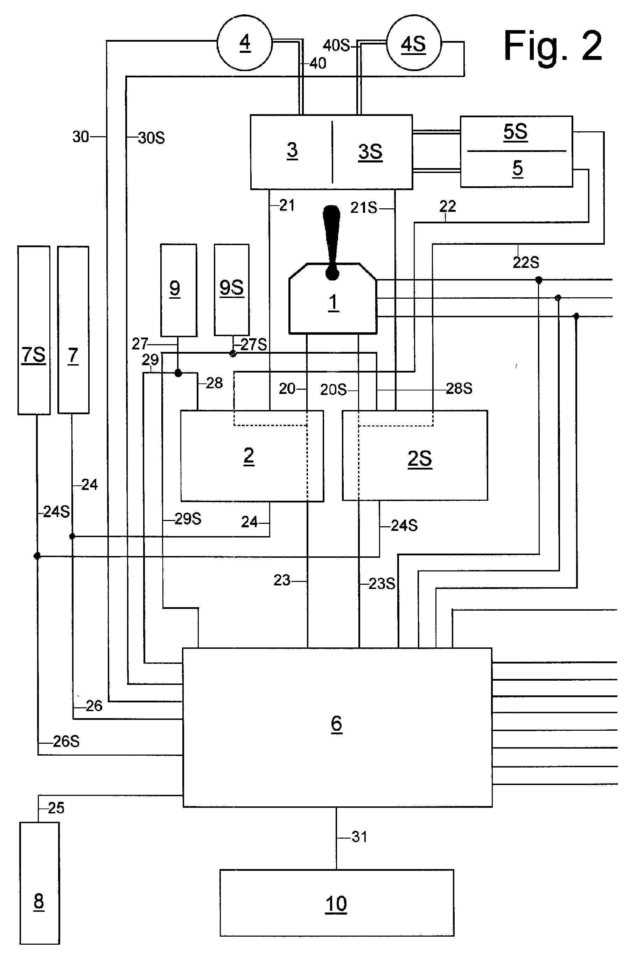

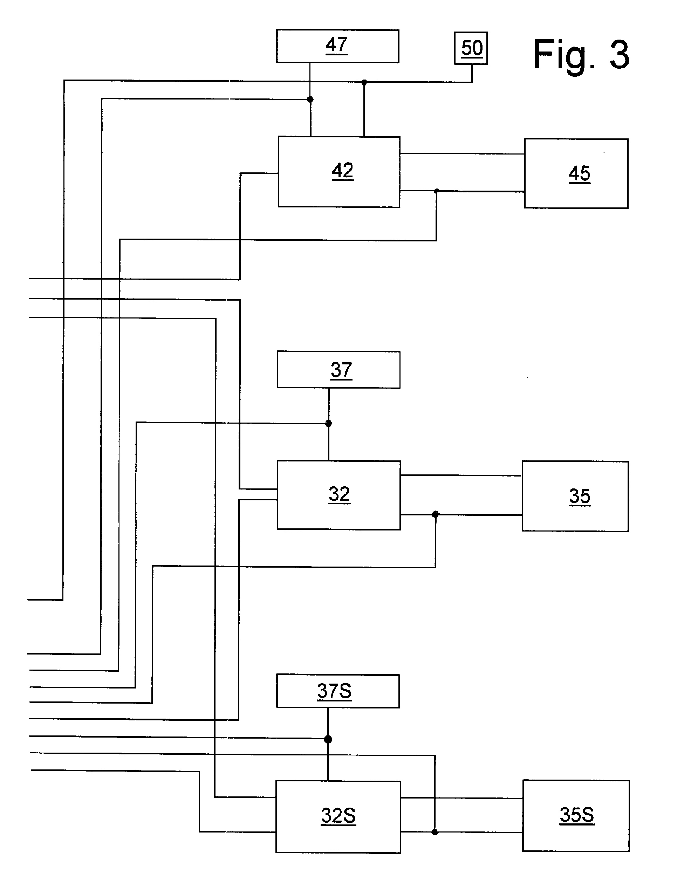

In Fig. 2 ist der linke Teil des Blockschaltbilds von Fig. 1 einer beispielhaften Ausführungsform der erfindungsgemäßen Joystick-Steuerung zur besseren Erkennbarkeit vergrößert dargestellt. Dieser Teil enthält alle Komponenten der Joystick-Steuerung beispielsweise für den Fall der Betätigung des Joysticks nach links und nach rechts zum Lenken eines Fahrzeugs in entsprechenden Richtungen. Darüber hinaus lässt der linke Teil noch Anschlussleitungen erkennen, die ihre Fortsetzung in Fig. 3 finden, die in vergrößerter Darstellung alle Komponenten der Joystick-Steuerung beispielsweise für den Fall der Betätigung des Joysticks nach vorn und nach hinten zum Gasgeben und Abbremsen zeigt, so weit die hierfür erforderlichen Komponenten nicht bereits in Fig. 2 dargestellt sind.

Die beispielhafte Ausführungsform der erfindungsgemäßen Joystick-Steuerung wird jetzt anschließend zunächst unter Bezugnahme auf Fig. 2 und gleichzeitiger Bezugnahme auf das Lenken eines Kraftfahrzeugs beschrieben. Das Lenken eines Kraftfahrzeugs ist dabei lediglich eine beispielhafte Anwendung. Eine andere beispielhafte Anwendung wäre beispielsweise das Verschwenken eines Kranarms oder das Anheben bzw. Absenken des Hebegeschirrs eines Krans.

Die Joystick-Steuerung verfügt über eine Joystickeinheit 1, die durch Betätigung ihres Joysticks verschiedene Arbeitsvorgänge veranlasst und steuert. Hierzu werden von der Joystickeinheit 1 Sollwert-Signale über eine Leitung 20 an eine Steuerelektronik 2 abgegeben, die daraufhin ihrerseits Steuersignale über eine Leitung 21 an eine hydraulischen Steuereinheit 3 abgibt. Die hydraulische Steuereinheit 3 ist im Wesentlichen ein Ventilblock, der in die hydraulische Leitung 40 eingebaut ist, die von einer hydraulischen Pumpe 4 aus zu einer hydraulischen Antriebseinheit 5 führt. Die hydraulische Antriebseinheit 5 ist derjenige Bereich einer Arbeitsmaschine, der zu regeln bzw. zu steuern ist. Bei einem Kraftfahrzeug ist die hydraulische Antriebseinheit 5 derjenige Teil, der die Durchführung von Lenkausschlägen bewirkt.

Für den Fall eines Kraftfahrzeugs ist in diesem Zusammenhang zu beachten, dass grundsätzlich alle Funktionen, die durch die erfindungsgemäße Joystick-Steuerung betroffen sind, in grundsätzlich normaler Bauweise und Ausführung erhalten bleiben, sodass die Joystick-Steuerung eine zusätzliche ergänzende Einrichtung dargestellt.

Die hydraulische Steuereinheit 3 regelt veranlasst durch die Steuersignale der Steuerelektronik 2 Durchflussmenge, Durchflussgeschwindigkeit etc. von Hydrauliköl der hydraulischen Pumpe 4 durch die Leitung 40 hindurch zu der hydraulischen Antriebseinheit 5. Der jeweils erreichte Arbeitszustand der hydraulischen Antriebseinheit 5 wird in der Form von Istwert-Signalen über eine Leitung 22 an die Steuerelektronik 2 gemeldet. Dort oder in einer der Steuerelektronik 2 nachgeschalteten Überwachungselektronik 6 wird ein Vergleich zwischen einerseits den Sollwert-Signalen der Joystickeinheit 1 und den Istwert-Signalen der Antriebseinheit 5 hindurchgeführt. Die Überwachungselektronik 6 ist mit der Steuerelektronik 2 über eine Leitung 23 zum bidirektionalen Signalaustausch verbunden.

Die hydraulische Pumpe 4 ist beispielsweise bei einem Kraftfahrzeug über einen nicht dargestellten Keilriemen durch den ebenfalls nicht dargestellten Fahrzeugmotor angetrieben. Die hydraulische Pumpe 4 arbeitet folglich immer dann, wenn der Fahrzeugmotor arbeitet.

Die Steuerelektronik 2 ist an eine Spannungsversorgung 7 über eine Leitung 24 angeschlossen, und die Überwachungselektronik 6 ist an eine Spannungsversorgung 8 über eine Leitung 25 angeschlossen. Die Spannungsversorgung 7 der Steuerelektronik 2 liefert im Übrigen über eine Abzweigungsleitung 26 ein Istwert-Signal ihrer Spannung an die Überwachungselektronik 6, während die Spannungsversorgung 8 für die Überwachungselektronik 6 das in letzterer benötigte zugehörige Istwert-Signal über die bereits genannte Leitung 25 liefert.

Weiter ist ein Geschwindigkeits-Sensor 9 vorgesehen, der ein für die jeweilige momentane Fahrzeuggeschwindigkeit des Kraftfahrzeugs kennzeichnendes Signal über eine Leitung 27 abgibt, die sich in eine Leitung 28 und 29 verzweigt, wobei die Leitung 28 zu der Steuerelektronik 2 führt und die Leitung 29 zu der Überwachungselektronik 6 führt.

Die hydraulische Pumpe 4 gibt im Übrigen über eine Leitung 30 Istwert-Signale betreffend Druck und Temperatur des hydraulischen Mediums beispielsweise von Hydrauliköl, und den Ölstand etc. an die Überwachungselektronik 6 ab.

Alle vorstehend genannten einzelnen Komponenten bilden in ihrer Zusammenfassung eine erfindungsgemäße Joystick-Steuerung in deren grundsätzlicher Ausführung, und zwar noch ohne Sicherheitskreise, also nur mit Hauptkreisen.

In der Steuerelektronik 2 ggf. in der Überwachungselektronik 6 ist ein Datenplan für die Beziehung zwischen der Stellung des Joysticks einerseits und der Sollbetätigung der jeweils zugehörigen Antriebseinheit andererseits, also für die Beziehung zwischen den von der Joystickeinheit 1 abgegebenen Sollwert-Signalen einerseits und den der jeweils zugehörigen Antriebseinheit zugeführten Sollwert-Signalen, beispielsweise der Antriebseinheit 5, andererseits gespeichert. Dieser Datenplan dient für die Erstellung der von der Steuerelektronik 2 aus an die Antriebseinheit, beispielsweise die hydraulische Antriebseinheit 5 über die hydraulische Steuereinheit 3, abzugebenden Steuersignale.

Schon bei einer nur flüchtigen Betrachtung von Fig. 2 ist erkennbar, dass die erfindungsgemäße Joystick-Steuerung fast alle einzelnen Komponenten in doppelter Ausführung enthält, nämlich in Hinblick auf die erfindungsgemäß vorzusehenden Sicherheitskreise. Zur Kennzeichnung dieser weiteren Komponenten sind diese mit identischen Bezugszeichen unter Hinzufügung. eines indizierten "S" bezeichnet. Zur Vermeidung etwaiger Missverständnisse in Zusammenhang mit der zeichnerischen Darstellung der hydraulischen Steuereinheiten und der hydraulischen Antriebseinheiten wird darauf hingewiesen beide Komponenten als sogenannte Zwillingskomponenten ausgebildet sind, also funktionell durchaus als Steuereinheit 3 und Antriebseinheit 5 eines Hauptkreises einerseits und als Steuereinheit 3S und Antriebseinheit 5S eines Sicherheitskreises andererseits zu verstehen sind.

In Abweichung von dem Antrieb der hydraulischen Pumpe 4 ist die hydraulische Pumpe 4S nicht durch den Fahrzeugmotor angetrieben, sondern durch einen nicht dargestellten eigenen Elektromotor.

Von einem Steuerungsbetrieb mittels der Hauptkreise wird auf einen Steuerungsbetrieb mittels der Sicherheitskreise immer dann umgeschaltet, wenn die Überwachungselektronik 6 oder ggf. die Steuerelektronik 2 bei einem Vergleich der an sie abgegebenen Istwert-Signale und Sollwert-Signale, einschließlich derjenigen der jeweils zugehörigen Spannungsversorgungen 7, 8 ggf. auch unter Mitberücksichtigung des Geschwindigkeitssignals des Geschwindigkeitssensor 9 eine unzulässige Abweichung festgestellt wird. Eine solche Umschaltung bewirkt die Überführung der Sicherheitskreise, die sich während das Steuerbetriebs der Hauptkreise im Standby-Modus befinden, von diesem in den Vollbetrieb-Modus bei gleichzeitiger Abschaltung der Hauptkreise. Bei einem Steuerbetrieb mittels der Sicherheitskreise empfängt also die hydraulische Antriebseinheit 5S Steuerungssignale über die hydraulische Steuereinheit 3S, die dieser über die Leitung 21S zugeführt werden.

Die Überwachungselektronik 6 umfasst neben der elektronischen Ausbildung zur Durchführung von Signalvergleichen eine elektronische Speichereinheit zur Speicherung aller ihr zugeführten Signale und der Ergebnisse der Signalvergleiche, und zwar in zweckmäßiger Weise in Kombination mit den jeweils zutreffenden Werten für Datum und Tageszeit.

Im Übrigen sind in der Überwachungselektronik 6 die Sollwerte der Spannungsversorgungen 7 und 8 für die Durchführung der entsprechenden Vergleiche mit den Istwerten gespeichert.

In der Steuerelektronik 2 ist im Übrigen ein Datenplan für die Beziehung zwischen der Stellung des Joysticks einerseits und der Sollbetätigung der jeweils zugehörigen Antriebseinheit andererseits, also für die Beziehung zwischen den der Joystickeinheit 1 abgegebenen Sollwert-Signalen einerseits und den der jeweils zugehörigen Antriebseinheit zugeführten Sollwert-Signalen, beispielsweise der Antriebseinheit 5, andererseits gespeichert.

Da die Überwachungselektronik 6 einen nicht dargestellten Ausgang für den Anschluss an einen Computer, ein Telefonnetz, ein Mobilfunktelefon oder ein Funkmodem aufweist, besteht die Möglichkeit, den gerade zuvor erwähnten Datenplan gegen einen Datenplan mit anderen Daten über diesen dann als Eingang zu verwendenden Ausgang auszutauschen.

Die Überwachungselektronik 6 ist über eine Leitung 31 an eine Anzeigeeinheit 10 ggf. mit optischen und/oder akustischen Alarmgebern angeschlossen. Über diese Anzeigeeinheit 10 wird der Benutzer der Joystick-Steuerung über die augenblicklichen Betriebszustände informiert.

Der vorstehende Teil der Beschreibung unter Bezugnahme auf Fig. 2 umfasst alle Komponenten der erfindungsgemäßen Joystick-Steuerung beispielsweise zum Lenken eines Kraftfahrzeugs oder einer anderweitigen Arbeit einer anderen Arbeitsmaschine. Die im vorstehenden Teil der Beschreibung nicht angesprochenen Leitungen, die in Fig. 2 enthalten sind und nicht mit einem Bezugszeichen versehen sind, betreffen die Ausbildung der erfindungsgemäßen Joystick-Steuerung zu dem Zweck beispielsweise des Abbremsens des Kraftfahrzeugs und des Gasgebens, welche Ausbildung in Fig. 3 detailliert dargestellt ist.

Fig. 3 befasst sich in ihrem unteren Teil mit der Ausbildung der erfindungsgemäßen Joystick-Steuerung betreffend beispielsweise das Abbremsen eines Kraftfahrzeugs. Hierzu sind in analoger Ausbildung zu der Ausbildung betreffend das Lenken eines Kraftfahrzeugs gemäß Fig. 2 wiederum eine Antriebseinheit 35, eine Steuerelektronik 32 und eine Spannungsversorgung 37 für die Steuerelektronik 32 vorgesehen. Diese drei Komponenten 35, 32, 37 sind funktionell analoge Komponenten zu der hydraulischen Antriebseinheit 5, der hydraulischen Steuereinheit 3 und der Spannungsversorgung 7 gemäß Fig. 2.

Die genannten drei Komponenten bilden in Zusammenhang mit den grundsätzlichen Komponenten der erfindungsgemäßen Joystick-Steuerung, die bereits bei der Beschreibung der erfindungsgemäßen Joystick-Steuerung für das Lenken eines Kraftfahrzeugs ausführlich beschrieben worden sind, den Hauptkreis zum Abbremsen eines Kraftfahrzeugs, wozu sie in analoger Weise zur Darstellung in Fig. 2 über in Fig. 3 nicht mit Bezugszeichen versehene Leitungen angeschlossen sind.

Zur Funktionsweise der erfindungsgemäßen Joystick-Steuerung das Abbremsen eines Kraftfahrzeugs betreffend kann zur Vermeidung von Wiederholungen auf die zugehörige Beschreibung das Lenken desselben betreffend verwiesen werden.

In analoger Weise zu der Ausbildung das Lenken des Kraftfahrzeugs betreffend ist auch das Abbremsen desselben betreffend ein Sicherheitskreis vorgesehen, der in identischer Weise zum Hauptkreis gleichartige Komponenten umfasst, die mit identischen Bezugszeichen unter Hinzufügung eines indizierten "S" bezeichnet sind.

Fig. 3 befasst sich in ihrem oberen Teil mit der Ausbildung der erfindungsgemäßen Joystick-Steuerung betreffend beispielsweise das Gasgeben bei einem Kraftfahrzeug. Hierzu sind in analoger Ausbildung zu der Ausbildung betreffend das Lenken eines Kraftfahrzeugs gemäß Fig. 2 eine Antriebseinheit 45, eine Steuerelektronik 42 und eine Spannungsversorgung 47 für die Steuerelektronik 42 vorgesehen. Diese drei Komponenten 45, 42, 47 sind funktionell analoge Komponenten zu der hydraulischen Antriebseinheit 5, der hydraulischen Steuereinheit 3 und der Spannungsversorgung 7 gemäß Fig. 2.

Die genannten drei Komponenten bilden in Zusammenhang mit den grundsätzlichen Komponenten der erfindungsgemäßen Joystick-Steuerung, die bereits bei der Beschreibung der erfindungsgemäßen Joystick-Steuerung für das Lenken eines Kraftfahrzeugs ausführlich beschrieben worden sind, einen Kreis zum Gasgeben bei einem Kraftfahrzeug, wozu sie in analoger Weise zur Darstellung in Fig. 2 über in Fig. 3 nicht mit Bezugszeichen versehene Leitungen angeschlossen sind.

Zur Funktionsweise der erfindungsgemäßen Joystick-Steuerung das Gasgeben bei einem Kraftfahrzeug betreffend kann wiederum zur Vermeidung von Wiederholungen auf die zugehörige Beschreibung das Lenken desselben betreffend verwiesen werden.

Obwohl auch das Gasgeben bei einem Kraftfahrzeug betreffend ein Sicherheitskreis vorgesehen sein kann, ist in Abweichung von der Ausbildung das Lenken des Kraftfahrzeugs betreffend und das Abbremsen des Kraftfahrzeugs betreffend in Fig. 3 für das Gasgeben bei einem Kraftfahrzeug kein Sicherheitskreis vorgesehen. In Hinblick auf das Fehlen eines Sicherheitskreises für das Gasgeben bei einem Kraftfahrzeug wird wiederum zur Vermeidung von Wiederholungen auf die entsprechenden Ausführungen weiter oben verwiesen.

Die Antriebseinheiten für das Abbremsen und das Gasgeben sind grundsätzlich, zumindest aber beispielhaft elektrische Antriebseinheiten elektrischen Stellmotoren.

Nur aus Gründen der Vollständigkeit der Beschreibung wird darauf verwiesen, dass im oberen Teil von Fig. 3 ein Bremslichtschalter 50 vorgesehen ist, der mit der Steuerelektronik 42 und der Überwachungselektronik 6 über Signalleitungen verbunden ist.

Die erfindungsgemäße Joystick-Steuerung beispielsweise mit der vorstehend beschriebenen Ausbildung, die grundsätzlichen als beispielhafte Ausbildung zu verstehen ist, bietet alle erdenklichen Möglichkeiten zur Steuerung einer Arbeitsmaschine durch Betätigen eines Joysticks, also auch zum Führen eines Kraftfahrzeugs durch eine körperbehinderte Person, und zwar in einer Weise, dass die Bedienungsperson ihre volle Aufmerksamkeit der Durchführung der Steuerung und der Beobachtung die Umgebung widmen kann, ohne sich fortlaufend um den betriebstechnischen Ablauf der Steuerung in Hinblick auf einen etwaigen Ausfall einer einzelnen Komponente kümmern zu müssen. Eine entsprechende Beobachtung wird im Rahmen der erfindungsgemäßen Joystick-Steuerung automatisch, und zwar elektronisch, durchgeführt, wobei die Joystick-Steuerung aus sich heraus bei der Feststellung irgendwelcher betriebstechnischer Abweichungen zwischen Ist- und Soll-Vorgängen für eine Umschaltung eines betroffenen Hauptpreises auf einen zugehörigen Sicherheitskreis sorgt.

## Patentansprüche

1. Joystick-Steuerung zum Steuern bzw. Führen einer Arbeitsmaschine, insbesondere eines Kraftfahrzeugs,
mit einer Joystickeinheit (1)
mit zwei voneinander unabhängigen, parallelen Steuerkreisen, nämlich einem Hauptsteuerkreis und einem Sicherheitssteuerkreis,
mit zwei voneinander unabhängigen, parallelen Arbeitskreisen zur Durchführung einer identischen Arbeit, nämlich einem Hauptarbeitskreis und einem Sicherheitsarbeitskreis in Zuordnung zu dem Hauptsteuerkreis bzw. dem Sicherheitssteuerkreis,
wobei jeder Arbeitskreis entweder aus einer hydraulischen Pumpe (4, 4S) mit einer nachgeschalteten hydraulischen Steuereinheit (3, 3S) und mit einer letzterer nachgeschalteten hydraulischen Antriebseinheit (5, 5S) oder aus einer elektrischen Antriebseinheit (35, 35S; 45) besteht,
wobei jeder Steuerkreis aus einer an einer Spannungsversorgung (7, 7S) angeschlossenen Steuerelektronik (2, 2S) besteht, die an die Joystickeinheit (1) angeschlossen ist und deren Sollwert-Signale für die Steuerung empfängt und zugehörige Steuersignale entweder über die hydraulische Steuereinheit (42) an die hydraulische Antriebseinheit (5, 5S) oder an die elektrische Antriebseinheit (35, 35S; 45) als Sollwert-Signale für diese abgibt, und zwar unter Bezugnahme auf einen in der Steuerelektronik (2, 2S) gespeicherten Datenplan für die Beziehung zwischen der Stellung des Joysticks einerseits und der Sollbetätigung der jeweils zugehörigen Antriebseinheit (5, 5S; 35, 35S; 45) andererseits, also für die Beziehung zwischen den Sollwert-Signalen der Joystickeinheit (1) einerseits und den Sollwert-Signalen der jeweils zugehörigen Antriebseinheit (5, 5S; 35, 35S; 45) andererseits,
wobei die Steuerelektronik (2) des Hauptkreises und die Steuerelektronik (2S) des Sicherheitskreises die jeweils zugehörigen hydraulischen Antriebseinheiten (5, 5S) über die hydraulische Steuereinheit (3, 3S) bzw. die jeweils zugehörigen elektrischen Antriebseinheiten (35, 35S; 45) in gegenseitig zeitlich und arbeitstechnisch identischer Weise zur identischen Durchführung ihrer Antriebsarbeit veranlassen,
wobei die Sicherheitskreise bei störungsfreiem Betrieb des jeweils zugehörigen Hauptkreises sich im Standby-Modus befinden bzw. betrieben werden und beim Auftreten einer Störung im jeweils zugehörigen Hauptkreis unter Abschaltung desselben vom Standby-Modus in den Vollbetrieb-Modus überführt werden, **dadurch gekennzeichnet,**
**dass** jeder Steuerelektronik (2, 2S) eine an eine Spannungsversorgung (8) angeschlossene Überwachungselektronik (6) zugeordnet ist,
**dass** in die Überwachungselektronik (6) fortlaufend alle an die Antriebseinheiten (5, 5S; 35, 35S; 45) als Sollwert-Signale abgegebenen Steuersignale der Steuerelektronik (2, 2S) sowie ein Istwert-Signal der Spannungsversorgung (7, 7S) der Steuerelektronik (2, 2S) und ein Istwert-Signal ihrer eigenen Spannungsversorgung (8, 8S), ggf. in Kombination mit der augenblicklichen Zeit, eingegeben werden,
**dass** in die Überwachungselektronik (6) die Istwert-Signale der Antriebseinheiten (5; 35, 35S; 45) eingegeben werden, die durch die Arbeit der Antriebseinheiten (5; 35, 35S; 45) in Reaktion auf die an die Antriebseinheiten (5; 35, 35S; 45) von der Steuerelektronik (2, 2S) abgegebenen Sollwert-Signale entstehen, und
**dass** in der Überwachungselektronik (6) ein Vergleich der Istwert-Signale der Antriebseinheiten (5; 35, 45) mit den zugehörigen Sollwert-Signalen sowie des Istwertes der Spannungsversorgung (7) der Steuerelektronik (2) mit einem intern gespeicherten Sollwert derselben und des Istwertes ihrer eigenen Spannungsversorgung (8) mit einem intern gespeicherten Sollwert derselben durchgeführt wird, und
**dass** für den Betrieb des Hauptsteuerkreises bei Feststellung einer unzulässigen Abweichung der Istwert-Signale der Antriebseinheiten (5; 35, 45) von den zugehörigen Sollwert-Signalen oder des Istwertes der Spannungsversorgung (7) der Steuerelektronik (2) von dem intern gespeicherten Sollwert derselben oder des Istwertes ihrer eigenen Spannungsversorgung (8) von dem intern gespeicherten Sollwert derselben entweder die Überwachungselektronik (6) oder die dieser zugeordnete Steuerelektronik (2) die Spannungsversorgung (7) für den Hauptsteuerkreis unterbricht und gleichzeitig die Spannungsversorgung (7S) für den Sicherheitssteuerkreis einschaltet.

2. Joystick-Steuerung nach Anspruch 1, **dadurch gekennzeichnet,**
**dass** in der Überwachungselektronik (6) und/oder der Steuerelektronik (2, 2S) ein Datenplan für die Beziehung zwischen den Sollwert-Signalen der Antriebseinheiten (5; 35, 35S; 45) einerseits und den angestrebten Istwert-Signalen gespeichert ist.

3. Joystick-Steuerung nach Anspruch 1, **dadurch gekennzeichnet,**
**dass** bei Feststellung einer Abweichung der Istwert-Signale der Antriebseinheiten (5; 35, 35S; 45) von den angestrebten zugehörigen Istwert-Signalen unterhalb einer vorbestimmten Abweichungsgröße die Steuerelektronik (2) solange veränderte Steuersignale als Sollwert-Signale an die Antriebseinheit (5; 35, 35S; 45) abgibt, bis die mit den ursprünglichen Sollwert-Signalen angestrebten Istwert-Signale erreicht sind.

4. Joystick-Steuerung nach irgendeinem der vorhergehenden Ansprüche, **dadurch gekennzeichnet,**
**dass** die Überwachungselektronik (6) ein Speicherelement zur Speicherung der Werte aller in die Überwachungselektronik (6) eingegebenen Signale sowie der Ergebnisse der durchgeführten Vergleiche umfasst.

5. Joystick-Steuerung nach irgendeinem der vorhergehenden Ansprüche,
**dadurch gekennzeichnet,**
**dass** der Überwachungselektronik (6) eine Anzeigeeinheit (10) zur Darstellung bestimmter Betriebszustände nachgeschaltet ist.

6. Joystick-Steuerung nach irgendeinem der vorhergehenden Ansprüche,, **dadurch gekennzeichnet,**
**dass** der Überwachungselektronik (6) optische und/oder akustische Alarmgeber nachgeschaltet sind.

7. Joystick-Steuerung nach irgendeinem der vorhergehenden Ansprüche,, **dadurch gekennzeichnet,**
**dass** jeder Steuerelektronik (2, 2S) ein und dieselbe Überwachungselektronik (6) zugeordnet ist.

8. Joystick-Steuerung nach Anspruch 4, **dadurch gekennzeichnet,**
**dass** dem Speicherelement der Überwachungselektronik (6) ein Ausgang zugeordnet ist, über den die gespeicherten Daten desselben von außen abrufbar sind.

9. Joystick-Steuerung nach Anspruch 8, **dadurch gekennzeichnet,**
**dass** der Anschluss für die Anschließung eines Computers mit einem Diagnoseprogramm ausgebildet ist.

10. Joystick-Steuerung nach Anspruch 8, **dadurch gekennzeichnet,**
**dass** der Anschluss für die Anschließung an ein Telefonnetz und/oder an ein Mobilfunktelefon ausgebildet ist.

11. Joystick-Steuerung nach Anspruch 8, **dadurch gekennzeichnet,**
**dass** der Anschluss mit einem integrierten Funkmodem ausgebildet ist

12. Joystick-Steuerung nach Anspruch 1, **dadurch gekennzeichnet,**
**dass** auch der Steuerelektronik (2, 2S) die Istwert-Signale der Antriebseinheiten (5, 5S; 35, 35S; 45) zuführbar sind.

13. Joystick-Steuerung nach Anspruch 1, **dadurch gekennzeichnet,**
**dass** der Datenplan für die Beziehung zwischen den Sollwert-Signalen der Joystickeinheit (1) einerseits und den Sollwert-Signalen der jeweils zugehörigen Antriebseinheit (5; 35, 35S; 45) andererseits gegen einen anderen Datenplan mit anderen Daten austauschbar ist.

14. Joystick-Steuerung nach irgendeinem der vorhergehenden Ansprüche, bei deren Verwendung zum Lenken eines Kraftfahrzeugs, **dadurch gekennzeichnet,**
**dass** ein Sensor (9, 9S) zum Feststellen der Fahrgeschwindigkeit des Kraftfahrzeugs vorgesehen ist,
**dass** dieser Sensor (9, 9S) ein die festgestellte Fahrgeschwindigkeit kennzeichnendes Signal an die zum Lenken eines Kraftfahrzeugs bestimmte Steuerelektronik (2, 2S) beider Arbeitskreise weitergibt und
**dass** die Steuerelektroniken (2, 2S) in Reaktion auf das empfangene Signal nach einer in ihnen abgespeicherten Funktion mit zunehmender Fahrgeschwindigkeit des Kraftfahrzeugs ihre zugehörige Antriebseinheit (5) zu einer degressiven Arbeitsweise derselben ansteuern.

15. Joystick-Steuerung nach Anspruch 14 in Verbindung mit Anspruch 2, **dadurch gekennzeichnet,**
**dass** das die Fahrgeschwindigkeit des Kraftfahrzeugs betreffende Signal in der Überwachungselektronik (6) bzw. in der jeweils zugehörigen Steuerelektronik (2, 2S), ggf. in Kombination mit der zugehörigen Zeit, gespeichert wird.

16. Joystick-Steuerung nach irgendeinem der vorhergehenden Ansprüche, **dadurch gekennzeichnet,**
**dass** der Joystick zusätzlich in einer zu seiner Betätigungsrichtung zum Lenken des Kraftfahrzeugs rechtwinkligen Richtung zum Gasgeben und in einer zur letztgenannten Richtung entgegengesetzten Richtung zum Abbremsen des Kraftfahrzeugs betätigbar ist und
**dass** für die weitere Funktionen zum Abbremsen des Kraftfahrzeugs ebenfalls zwei voneinander unabhängige, parallele Arbeitskreise zur Durchführung einer identischen Arbeit vorgesehen sind,
wobei jeder dieser weiteren Arbeitskreise aus einer Steuerelektronik (32, 32S; 42) und aus einer elektrischen Antriebseinheit (35, 35S; 45) besteht.

17. Joystick-Steuerung nach Anspruch 16, **dadurch gekennzeichnet, dass** die Joystick-Steuerung das Gasgeben und das Abbremsen betreffend im übrigen grundsätzlich in der gleichen Weise wie für das Lenken des Kraftfahrzeugs ausgebildet ist.
